# EUROPÄISCHE PATENTSCHRIFT

(11) **EP 0 754 594 B1**
(45) Veröffentlichungstag und Bekanntmachung des Hinweises auf die Patenterteilung: **08.01.2003**
(21) Anmeldenummer: 96111526.8
(22) Anmeldetag: 17.07.1996
(51) Int. Cl.: B60R 5/04, B60R 21/06

(54) **Abdeckeinrichtung mit hoher Crashsicherheit**
Roller blind with high crash safety
Rideau écran avec sécurité élevée en cas d'accident

(30) Priorität: 21.07.1995 DE 19526666
(43) Veröffentlichungstag der Anmeldung: 22.01.1997
(73) Patentinhaber: Bayerische Motoren Werke Aktiengesellschaft, 80788 München (DE); Baumeister + Ostler GmbH & Co. KG, 73773 Aichwald (DE)
(72) Erfinder: Ament, Eduard, 73773 Aichwald (DE); Seel, Holger, 71134 Aidlingen (DE); Stöckl, Siegfried, 84076 Pfaffenhausen (DE); Stahmer, Michael, 81241 München (DE)

(56) Entgegenhaltungen:
- EP-A- 0 234 497
- EP-A- 0 258 823

## Beschreibung

Um den Laderaum von Kombi-Personenkraftfahrzeugen abzudecken und so den Einblick in den Laderaum zu verhindern, ist es beispielsweise aus der DE-A-44 05 280 bekannt, Abdeckrollos zu verwenden. Dieses bekannte Abdeckrollo weist ein längliches Gehäuse auf, in dem eine Wikkelwelle drehbar gelagert ist. An dieser Wickelwelle ist einenends eine Rollobahn befestigt, die durch einen Schlitz in dem Gehäuse aus dem Gehäuse ausziehbar ist. Mit der Wickelwelle ist ein Federmotor verbunden, der dazu dient, die Rollobahn wiederum auf die Wickelwelle aufzuwickeln, wenn das Abdeckrollo die Zugangsöffnung nicht verdecken soll.

Das Gehäuse selbst besteht aus einem etwa zylindrischen Teil, an dessen Enden Endkappen aufgesetzt sind, in denen Verriegelungsglieder beweglich gelagert sind. Mit diesen Endkappen sitzt das Abdeckrollo in entsprechenden Aufnahmetaschen, die karosserieseitig hinter der aufgerichteten Rücklehne des Kombi-PKW vorgesehen sind. Dadurch ist es möglich, das Abdeckrollo vollständig aus dem Fahrzeug zu entnehmen, wenn beispielsweise der gesamte Laderaum benötigt wird und hierzu die Rücksitzlehne zumindest umgeklappt wird.

Das bekannte Abdeckrollo verhindert nicht nur den Einblick in dem Teil des Laderaums, der sich unterhalb des ausgezogenen Abdeckrollos befindet, sondern es bringt auch noch eine gewisse Sicherheitsfunktion im Falle eines Frontalaufpralls. Im Laderaum befindliche Teile werden beim Frontalaufprall nach vorne in Richtung Fahrgastraum geschleudert. Unter ungünstigen Umständen werden sie jedoch nicht von der Rücksitzlehne zurückgehalten, sondern klettern an schrägen Flächen hoch, überwinden dadurch die Rücksitzlehne und fliegen den Fahrgästen von hinten gegen den Kopf. Das ausgezogene und in der Nähe der Heckklappe verankerte Abdeckrollo verhindert ein solches Hochklettern und hält dadurch weitgehend sicher die im Laderaum befindlichen Teile zurück.

Allerdings besteht die Gefahr des Lösens des Gehäuses, wenn sich beim Frontalaufprall die Karosserie aufweitet und die Aufnahmetaschen von dem Gehäuse heruntergleiten.

Bei aufgerichteter Rücksitzlehne werden bei einem Frontalaufprall die von der Ladung ausgeübten Kräfte weitgehend durch die Rücksitzlehne selbst aufgenommen und das Abdeckrollo braucht nur wesentlich kleineren Belastungen standzuhalten. Dasselbe gilt naturgemäß auch für die Verankerung des Gehäuses in den entsprechenden karosserieseitigen Taschen.

Wesentlich ungünstiger sind dagegen die Verhältnisse, wenn die Ladehöhe im Laderaum die Oberkante der aufgerichteten Rücksitzlehne übersteigt. In diesem Falle wird zur Sicherung des Fahrgastraumes ein Sicherheitsnetz verwendet, das bei der Oberkante der Rücksitzlehne beginnt und bis knapp unter den Dachhimmel reicht. Die Kräfte, die hierbei in dem Sicherheitsnetz auftreten, sind so groß, dass hierzu die Verankerungseinrichtungen, wie sie für Abdeckrollos bekannt sind, nicht ausreichen würden.

Aus der EP 0 234 497 A2 ist ein Abdeckrollo zum Abdecken des Laderaums von Personenkraftfahrzeugen bekannt, das ein längliches Gehäuse enthält, in dem eine Tuchwelle drehbar gelagert ist, an der mit einer Kante eine durch einen Tuchschlitz in dem Gehäuse ausziehbare Rollobahn befestigt ist. Mittels zwei ersten Haltegliedern an den Stirnseiten des länglichen Gehäuses und zwei zweiten Haltegliedern an den Innenseiten von Seitenwänden des Kraftfahrzeugs ist das Abdeckrollo lösbar angebracht. Diese Anordnung schafft ein Gehäuse, das sich leicht aus dem PKW herausnehmen lässt und klapperfrei gehalten ist.

Aus der EP 0 258 823 A1 ist ein Rollo für das Heckabteil eines Kombifahrzeuges bekannt, das ein an der Rückenlehne eines Sitzes befestigtes Gehäuse und eine im Gehäuse drehbar gelagerte, von einer Feder vorgespannte Rollowelle aufweist. An der Rückenlehne des Sitzes sind eine erste Befestigungseinrichtung und an einer Seite des Rollogehäuses eine mit der ersten in lösbaren Eingriff bringbare zweite Befestigungseinrichtung sowie an einer von der die zweite Befestigungseinrichtung tragenden Seite verschiedenen Seite des Rollogehäuses eine dritte Befestigungseinrichtung angeordnet, die mit der ersten Befestigungseinrichtung identisch ist.

Die Abdeckungen aus dem Stand der Technik haben keine Schutzrollos, die insbesondere eine hohe Crashsicherheit bieten.

Ausgehend von der EP 0 234 497 A2 ist es Aufgabe der Erfindung, eine Abdeckund Trenneinrichtung für einen Kombi-PKW zu schaffen, die weitgehend vollständig aus dem Fahrzeug zu entnehmen ist, um den Laderaum vollständig ausnutzen zu können und deren Verankerung im Fahrzeug eine sehr hohe Crashsicherheit bietet.

Diese Aufgabe wird erfindungsgemäß durch die Abdeckeinrichtung mit den Merkmalen des Anspruches 1 gelöst.

Die Verwendung von arm- oder zapfenförmigen Verankerungsgliedern, die sich parallel zur Fahrtrichtung erstrecken, wobei die freien Enden in Richtung auf das Vorder- oder Hinterende des Fahrzeuges weisen, in Verbindung mit entsprechenden Verankerungsöffnungen gewährleisten eine sehr hohe Sicherheit bei Auffahrunfällen. Insbesondere kann sich die neue Verbindung zwischen Karosserie und Gehäuse der Abdeckeinrichtung auch dann nicht lösen, wenn sich die Karosserie bei einem Zusammenstoß im Bereich des Gehäuses der Abdeckeinrichtung seitlich weiten sollte. Bei den bekannten Konstruktionen für Abdeckrollos besteht die Gefahr, dass beim Aufweiten der Karosserie die Verriegelungseinrichtungen freikommen. Bei der neuen Lösung mit in entsprechenden Öffnungen eingreifenden Armen oder Zapfen kann dies nicht geschehen.

Für die neue Lösung ist es gleichgültig, ob die Arme oder Zapfen an dem Gehäuse und die Öffnungen karosserieseitig untergebracht sind oder ob umgekehrt die Zapfen in der Karosserie fest verankert sind, während sich die Öffnungen am Gehäuse befinden. Aus Gründen der Handhabbarkeit ist es jedoch von Vorteil, wenn die Zapfen sich in der Karosserie befinden, wo sie bei herausgenommenem Gehäuse weniger störend sind, während das Gehäuse selbst im herausgenommenen Zustand keine unnötig vorstehenden Teile aufweist.

Ein weiterer Vorteil der im wesentlichen parallel zur Fahrtrichtung ausgerichteten Zapfen besteht darin, daß die Verriegelungseinrichtungen, die das Gehäuse auf den Zapfen sichern sollen, keine oder nur geringe Kräfte aufnehmen müssen, wenn wegen eines Frontalzusammenpralls Kräfte in das Gehäuse eingeleitet werden.

Somit eignet sich die neue Anordnung sowohl für reine Abdeckrollos als auch für Gehäuse, in denen Sicherheitsnetze aufgewickelt untergebracht sind, die im benutzten Zustand sich von dem Gehäuse zum Dachhimmel erstrecken, als auch schließlich für Anwendungen, bei denen in dem Gehäuse sowohl ein Sicherheitsnetz als auch ein Abdeckrollo untergebracht sind, die wahlweise je nach Beladezustand des Laderaums in ihre Funktionsstellung gebracht werden.

Da Karosserien wegen der erforderlichen Fertigungstoleranzen naturgemäß auch in der Breite um bis zum 15 mm im Bereich der Oberkante der Rücksitzlehne streuen können, ist es vorteilhaft, wenn die Verankerungsöffnung, in Längsrichtung des Gehäuses gemessen, eine größere Breite aufweist als das jeweilige Verankerungsglied, gemessen in derselben Richtung. Dadurch kann, gleichgültig welche Abmessungen die Karosserie jeweils hat, problemlos das Gehäuse auf die Verankerungsglieder geschoben werden bzw. umgekehrt das Gehäuse mit den Verankerungsgliedern in die Öffnungen eingeschoben werden.

Herstellungsmäßig sehr einfache Verhältnisse ergeben sich, wenn die Verankerungsöffnungen von einem über die Länge des Gehäuses durchgehenden Schlitz gebildet sind. Dieser Schlitz ist aus Festigkeitsgründen vorzugsweise der Schlitz einer über die Länge des Gehäuses durchgehenden Nut.

Die Weite dieser Nut ist an die Dicke des Zapfens jeweils angepaßt. Die zapfenförmigen Verankerungsglieder werden vorteilhafterweise jeweils von geraden Flächen begrenzt, deren Erzeugende parallel zu der Längserstrekkung des Gehäuses liegt. Im Falle der Querbelastung vermindern sich wegen der flächigen Anlage deutlich die Verformungskräfte, die an den Kontaktstellen zwischen den Verankerungsgliedern und den Verankerungsöffnungen wirksam sind.

Insgesamt wird die Herstellung des Gehäuses sehr kostensparend, wenn derjenige Teil von einem Abschnitt eines Strangpreßprofiles gebildet ist, der diejenige Nut enthält, die die Aufnahmeöffnung bildet.

Bei einem Frontalaufprall werden von den herumfliegenden Gepäckteilen des Laderaums Kräfte in das Gehäuse der Abdeckeinrichtung eingeleitet, die nach oben bzw. schräg nach oben vorne gerichtet sind. Deswegen ist es besonders vorteilhaft, wenn die Verankerungsglieder etwa horizontal ausgerichtet sind, weil sie dann eine sehr große Kraft aufnehmen können.

Die Verriegelungsglieder sind zweckmäßigerweise schwenkbar gelagert, und zwar befinden sie sich außerhalb des Gehäuses, das dadurch verhältnismäßig klein gehalten werden kann. Dessen Außenabmessungen sind dann nur geringfügig größer als der auf der Wickelwelle bzw. den Wickelwellen vorhandene Wickel des Sicherheitsnetzes bzw. des Abdeckrollos. Ein zusätzlicher Platz zum Unterbringen der Verriegelungsglieder wird nicht benötigt, während andererseits in der Karosserie genügend Platz zum Unterbringen der Verriegelungsglieder vorhanden ist, ohne daß diese störend in Erscheinung treten.

Eine besonders zweckmäßige Stelle zur Anbringung und Lagerung der Verriegelungsglieder ist im Bereich der Verankerungsglieder, und zwar unter diesen. Wenn sich die Lagerstelle für das Verriegelungsglied unter dem freien Ende des Verankerungsgliedes befindet, entsteht eine selbstsperrende Verriegelungskraft, die das Gehäuse auf den Verankerungsgliedern hält, ohne daß besonders starke Vorspannkräfte notwendig sind, die im Ruhezustand die Verriegelungsglieder in die Eingriffsstellung mit dem Gehäuse vorspannen.

Die Verriegelungswirkung läßt sich sehr einfach dadurch erzielen, daß an einer betreffenden Unterseite des Gehäuses eine Rippe vorhanden ist, die mit dem Verriegelungsglied zusammenwirkt. Diese Rippe erstreckt sich ebenfalls über die gesamte Länge des Gehäuses, wenn dieses aus einem Abschnitt eines Strangpreßprofils hergestellt ist.

Die Montage wird erleichtert, wenn die Lagerungsmittel für das Verriegelungsglied und das Verankerungsglied einstückig miteinander ausgeführt sind. Auch hierbei besteht die Möglichkeit, einen Abschnitt eines Strangpreßprofils zu verwenden.

Um das Verriegelungsglied in die Lösestellung zu überführen, ist an dem Verriegelungsglied eine Betätigungsfläche vorgesehen, die seitlich über das Verankerungsglied übersteht. Mit dieser Betätigungsfläche wirkt ein Betätigungsorgan zusammen, das vorzugsweise in dem Gehäuse gelagert ist. Dieses Betätigungsorgan kann ein Betätigungsschieber sein, der sich vor und neben der Verankerungsöffnung befindet, so daß das Strangpreßprofil, das das Gehäuse bildet, in seiner Festigkeit nicht durch Öffnungen beeinträchtigt ist, die der Aufnahme des Betätigungsorgangs dienen würden.

Gemäß einer Weiterbildung der Erfindung kann an dem Gehäuse ein zweiter Satz von Verankerungsgliedern oder Verankerungsöffnungen vorgesehen sein. Dieser zweite Satz ermöglicht es, die neue Abdeckeinrichtung im Fußraum des Kombi-PKW unterzubringen, um das Sicherheitsnetz auch dann verwenden zu können, wenn zwecks Vergrößerung des Ladevolumens die Rücksitzlehne zumindest nach vorne umgeklappt ist. Würde die Abdeckeinrichtung im Bereich der Oberkante der aufgerichteten Rücksitzlehne verbleiben, würde quer durch den Laderaum das Gehäuse verlaufen und die Lademöglichkeit signifikant beeinträchtigen. Durch die Möglichkeit, das Gehäuse im Fußraum zu verankern, wird dieser Nachteil vermieden.

Sehr einfache Verankerungsglieder des zweiten Satzes sind beispielsweise pilzförmige Verankerungsglieder, die mit einer entsprechend gestalteten T-Nut zusammenwirken. Diese T-Nut bildet die Aufnahmeöffnungen des zweiten Satzes und kann zweckmäßigerweise unterhalb der Vorderkante des Rücksitzes als gerade durchgehende Nut ausgebildet sein. Das Gehäuse mit dem Sicherheitsnetz läßt sich durch eine offene hintere Tür mit den pilzartigen Verankerungsgliedern in die Nut einschieben.

In der Zeichnung sind Ausführungsbeispiele des Gegenstandes der Erfindung dargestellt. Es zeigen:
Fig. 1 den aufgebrochen veranschaulichten Heckbereich eines Kombi-PKW unter Veranschaulichung der neuen Abdeckeinrichtung,
Fig. 2 die Abdeckeinrichtung nach Fig. 1 in der herausgenommenen Stellung und stark schematisiert, in perspektivischer Darstellung,
Fig. 3 eine Rückansicht auf ein seitliches Ende des Gehäuses der Abdeckeinrichtung nach Fig. 2,
Fig. 4 das Gehäuse der Abdeckeinrichtung nach Fig. 2, geschnitten längs der Linie IV, in einer Seitenansicht,
Fig. 5 das Gehäuse der Abdeckeinrichtung nach Fig. 2, geschnitten längs der Linie V-V im eingesetzten Zustand, in einer Seitenansicht,
Fig. 6 das Gehäuse der Abdeckeinrichtung in einem Schnitt ähnlich wie Fig. 5 unmittelbar vor dem Einsetzen,
Fig. 7 die Verankerungseinrichtung für die Abdeckeinrichtung, in einer vergrößerten perspektivischen Darstellung,
Fig. 8 die Verriegelungseinrichtung für die neue Abdeckeinrichtung, in einer schematisierten perspektivischen Darstellung und
Fig. 9 die Anbringung der neuen Abdeckeinrichtung im Fußraum vor dem Rücksitz, in einer Seitenansicht.

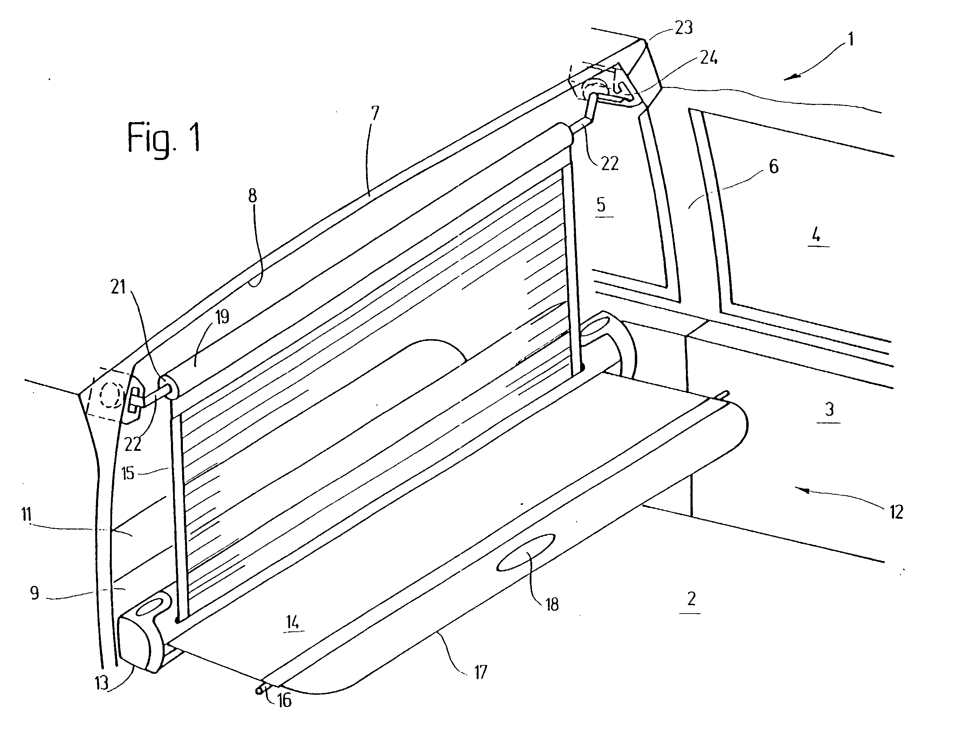

Fig. 1 zeigt einen aufgebrochenen Heckbereich 1 eines Kombi-PKW, und zwar etwa aus einer Blickrichtung entsprechend der weggebrochenen linken hinteren Ecke. Der Heckbereich 1, der einen Laderaum bildet, weist einen Boden 2 sowie zwei zueinander spiegelbildliche und voneinander beabstandete Seitenwände 3 auf, von denen wegen der aufgebrochenen Darstellung lediglich eine erkennbar ist. Die Seitenwand 3 enthält zwei hintere Seitenfenster 4 und 5, die durch eine C-Säule 6 voneinander getrennt sind. Über den beiden Seitenwänden 3 spannt sich ein Dach 7 mit einem zu dem Innenraum des Fahrzeugs zeigenden Dachhimmel 8.

Eine in der Figur nicht mehr erkennbare Hecköffnung des Fahrzeugs ist mittels einer entsprechenden Heckklappe oder Hecktür verschließbar.

Etwa zwischen den beiden C-Säulen 6 verläuft die Oberkante einer aufgerichteten Rücksitzlehne 9, die schräg nach hinten ragt und unterhalb derer eine Rücksitzfläche 11 vorgesehen ist.

Zum Abtrennen des in dem Heckbereich 1 befindlichen Laderaums von dem Fahrgastraum bzw. zum Abdecken des Laderaums in dem Heckbereich ist eine Abdeck- und Trenneinrichtung 12 vorgesehen. Diese weist ein längliches Gehäuse 13 auf, aus dem ein Abdeckrollo 14 sowie ein Sicherheitsnetz 15 wahlweise ausziehbar sind. Das Gehäuse 13 erstreckt sich etwa auf Höhe der Oberkante der Rücksitzlehne 9 im wesentlichen zwischen den beiden Seitenwänden 3.

Das Abdeckrollo 14 besteht aus einer undurchsichtigen flexiblen und geschlossenen Folienbahn, die an ihrer freien Kante mit einer über die Breite durchlaufenden Verankerungsstrebe 16 versehen ist, über die nach hinten eine Abdeckklappe 17 mit einem Griffloch 18 übersteht. Mit Hilfe der beidseits überstehenden Strebe 16 kann das ausgezogene Abdeckrollo 15 in nicht weiter gezeigten Haltern verankert werden, so daß es straff die untere Hälfte des Laderaums zwischen der Rücksitzlehne 9 und der Heckklappe überspannt. Dabei verläuft das Abdeckrollo 14 etwa in Höhe der unteren Kanten der Seitenfenster 4 und 5 und etwa parallel zu dem Boden 2.

Das Sicherheitsnetz 15 trägt an seiner freien Kante eine angenähte Schlaufe 19, durch die eine Haltestrebe 21 hindurchläuft. Die Haltestrebe 21 ist ein Rohr, in dem längsverschieblich zwei Halteglieder 22 eingesetzt sind, die an ihren Enden scheibenförmige Köpfe 23 tragen. Diese scheibenförmigen Köpfe 23 sind in T-nutförmige Taschen 24 einführbar, die sich knapp unterhalb des Dachhimmels 8 in der Nähe der beiden Seitenwände 3 befinden. Auf diese Weise wird das Sicherheitsnetz 15 gespannt gehalten, und zwar so, daß seine von der Schlaufe 19 gebildete freie Kante knapp unterhalb des Dachhimmels 8 verläuft.

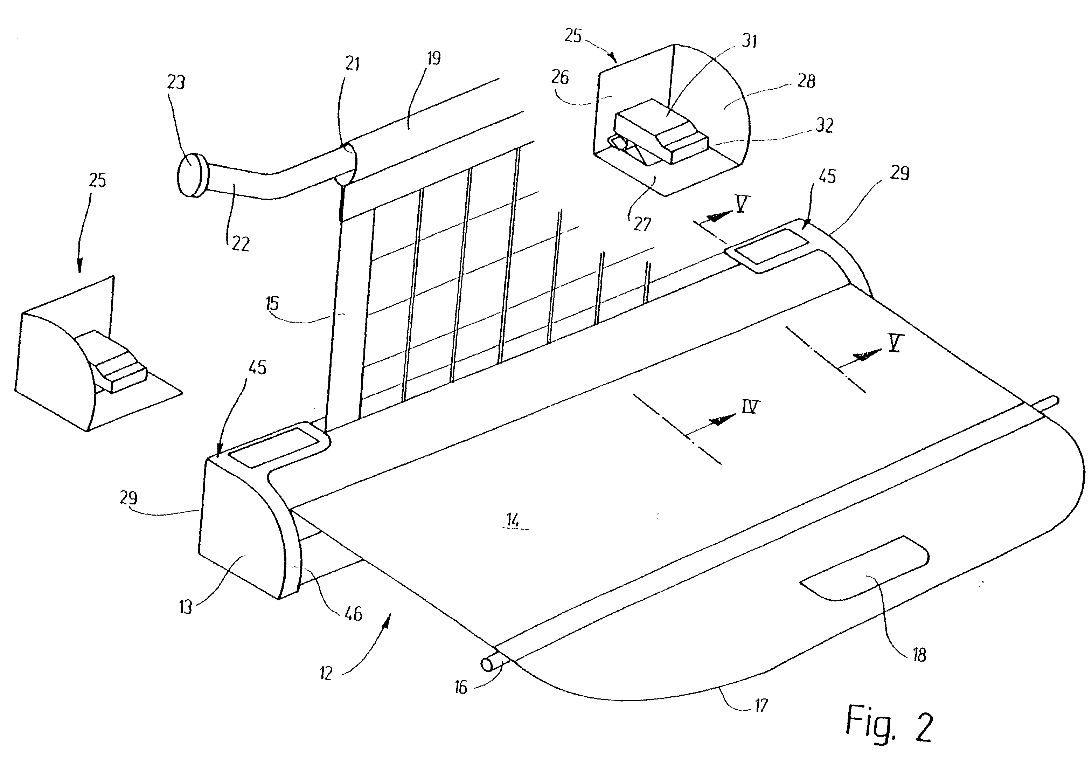

Die Art der Verankerung des Gehäuses 13 der Abdeckeinrichtung 12 ist in Fig. 2 stark schematisiert veranschaulicht, wobei die Karosserieteile weggelassen sind, um das wesentliche zu erkennen.

In der Karosserie sind hinter der Rücksitzlehne 9 im Bereich der beiden Seitenwände zwei zueinander spiegelsymmetrische Aufnahmetaschen 25 vorhanden, die aufeinander zu sowie nach oben zum Dachhimmel 8 und nach hinten zu offen sind. Dementsprechend werden die beiden Aufnahmetaschen 25 jeweils von einer rückwärtigen Wand 26, einer Bodenfläche 27 sowie einer seitlichen Wand 28 begrenzt.

Das Gehäuse 13 ist an seinen Stirnenden 29 komplementär gestaltet, so daß es in die Aufnahmetaschen 25 hineinpaßt.

Wie die Fig. 2 ferner erkennen läßt, erstrecken sich in die Aufnahmetaschen 25 zwei im Querschnitt rechteckige Verankerungszapfen 31, die von der rückwärtigen Wand 26 her in die jeweilige Aufnahmetasche 25 hineinragen, und zwar etwa parallel zu der Bodenfläche 27. Bezogen auf das Fahrzeug, in dem sich die Aufnahmetaschen 25 befinden, zeigen die Verankerungszapfen 31 mit ihrer Längsachse parallel zur Fahrtrichtung, wobei ihre freien Enden 32 in Richtung auf das Hinterende des Fahrzeugs weisen.

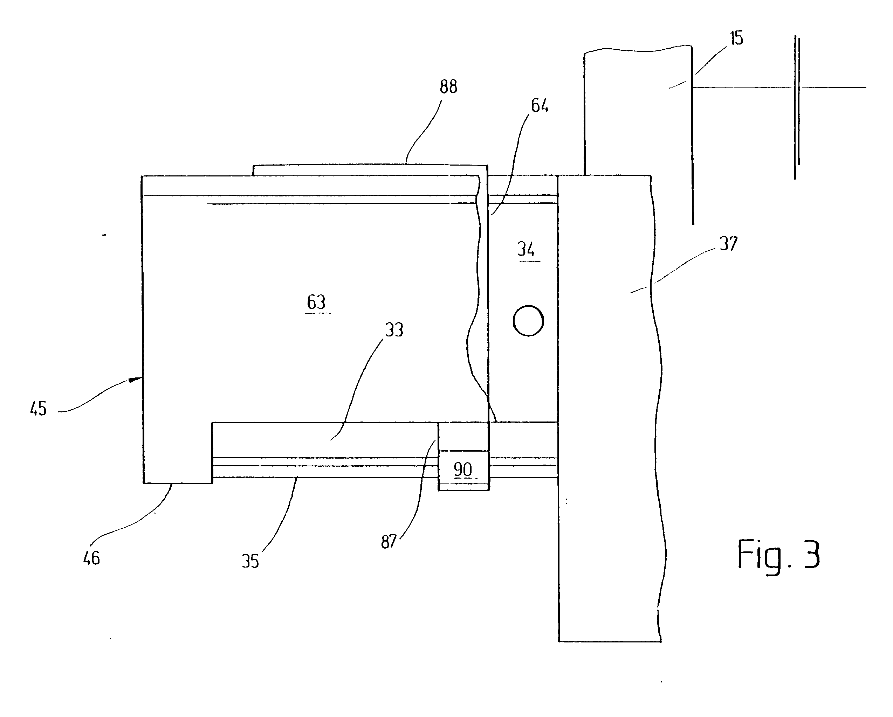

Die Verankerungszapfen 31 wirken mit Verankerungsöffnungen 33 zusammen, die sich in einer der Rücksitzlehne 9 zugewandten Rückfläche 34 des Gehäuses 13 in der Nähe von dessen Unterseite 35 befinden, wie dies Fig. 3 erkennen läßt.

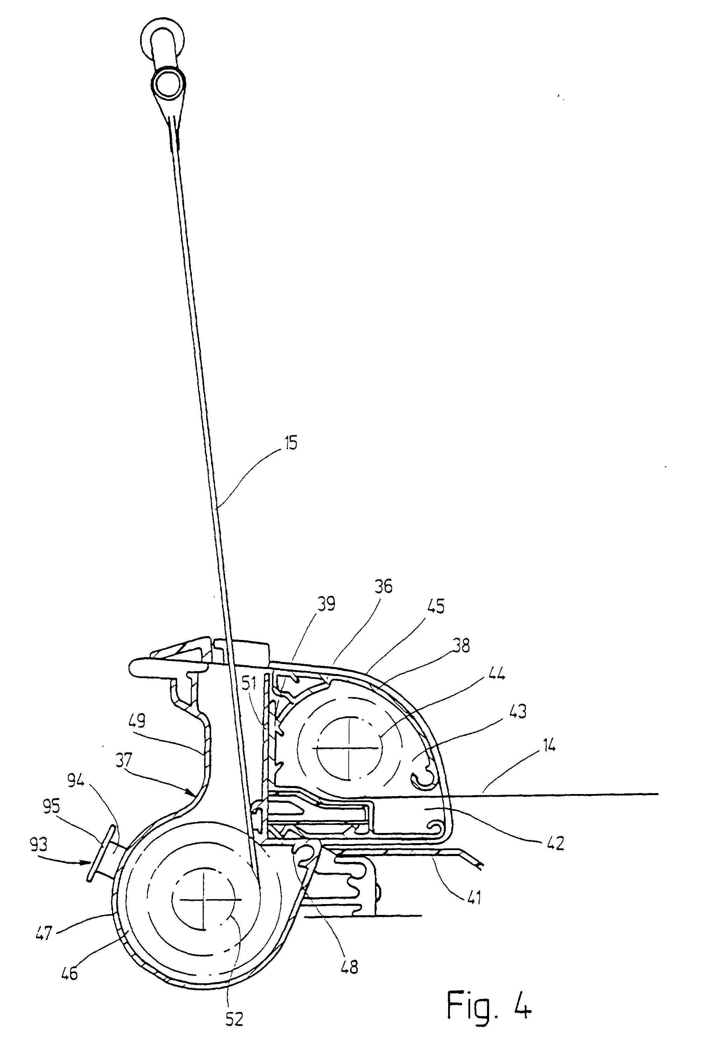

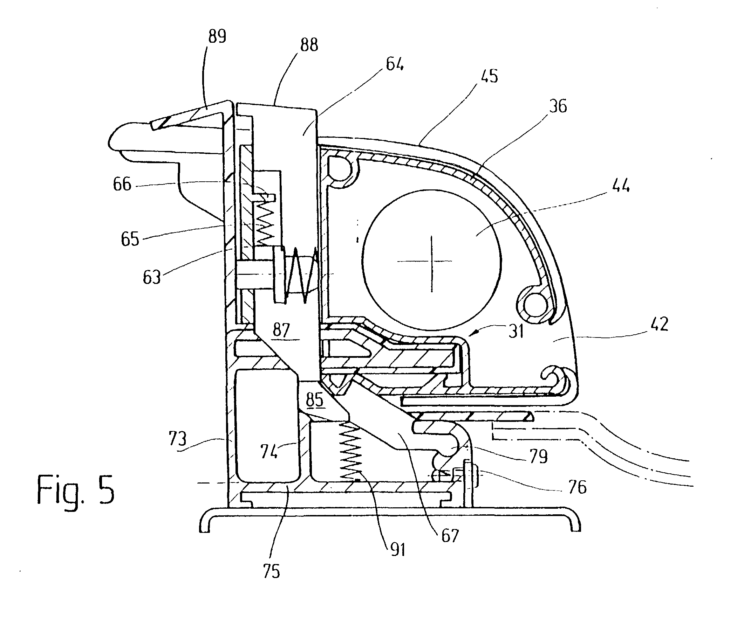

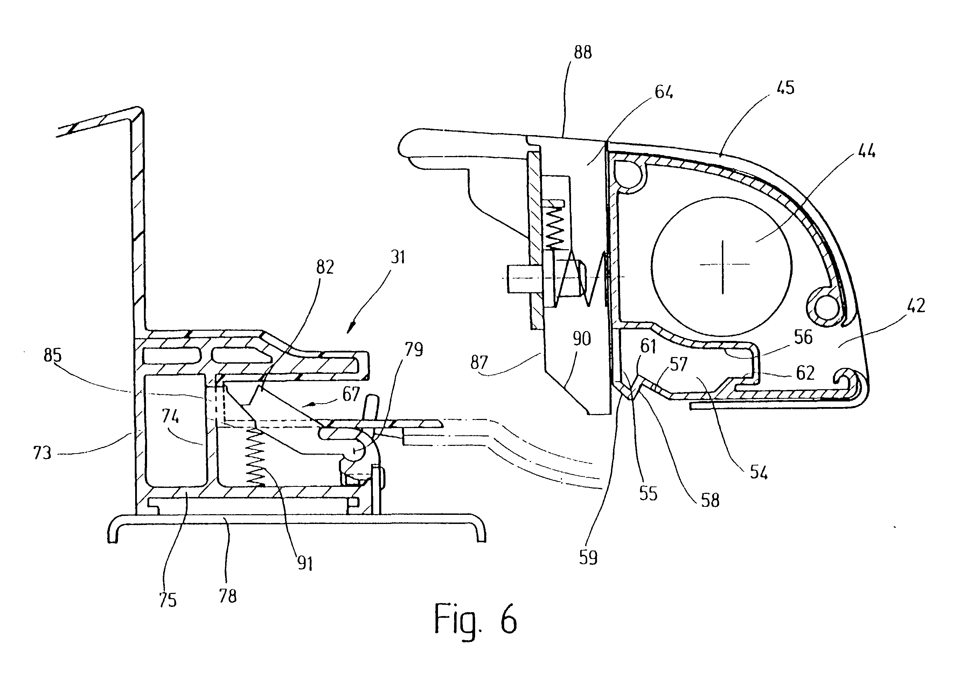

Die Fig. 4, 5 und 6 zeigen Schnitte durch die Abdeckeinrichtung 12. Im einzelnen zeigt Fig. 4 einen Schnitt längs der Linie IV nach Fig. 2, während die Fig. 5 und 6 Schnitte im Bereich der Linien V-V aus Fig. 2 veranschaulichen.

Das Gehäuse 13 besteht gemäß Fig. 4 aus zwei aneinander befestigten Strangpreßprofilabschnitten 36 und 37, die vorzugsweise aus einer Aluminiumlegierung bestehen und Gehäuseabschnitte bilden, in denen das Sicherheitsnetz 15 bzw. das Abdeckrollo 14 unterzubringen sind. Das Strangpreßprofil 36 wird, im Querschnitt gesehen, von drei Hauptabschnitten 38, 39 und 41 begrenzt. Der Abschnitt 39 ist im wesentlichen eben und bildet die Rückfläche 34, der Abschnitt 41 ist ebenfalls im wesentlichen eben und bildet die Unterseite 35, während der Abschnitt 38 viertelkreisförmig gekrümmt ist, womit sich, im Querschnitt gesehen, das Profil eines Viertelstabs ergibt. Die Abschnitte 38 und 41 gehen einstückig in den Abschnitt 39 über, während an der Übergangsstelle zwischen dem Abschnitt 41 und dem Abschnitt 38 ein Tuchschlitz 42 ausgebildet ist, der die Zugangsöffnung zu einer von den Abschnitten 38, 39 und 41 begrenzten Kammer 43 bildet. In dieser Kammer 43 ist eine Wickelwelle 44 drehbar gelagert, auf der das Abdeckrollo 14 aufwickelbar ist und an der es mit einer Kante befestigt ist.

Die Lagerung der Wickelwelle 44 geschieht in bekannter Weise auf Lagern, die in Endstücken 45 vorhanden sind, die auf die freien Enden des Strangpreßprofilabschnitts 36 aufgesteckt sind und diesen an seiner Außenumfangsfläche ein Stück weit mit ihrem becherförmigen Rand 46 umgeben.

Der Strangpreßprofilabschnitt 37 hat, in Längsrichtung des Gehäuses 13 gesehen, eine deutlich kürzere Erstreckung als der Strangpreßprofilabschnitt 36, so daß letzterer endseitig über den Abschnitt 37 übersteht, wie dies Fig. 3 erkennen läßt.

Der Abschnitt 37 weist einen eine teilzylindrische Kammer 46 umgebenden Bereich 47 auf, der einerseits in eine Schulterfläche 48 und andererseits in eine aufsteigende Wand 49 übergeht. An die Schulterfläche 48 schließt sich eine im wesentlichen glatte Wand 51 an, die parallel und im Abstand zu der Wand 49 verläuft. Mit der Schulterfläche 48 und der Wand 51 ist der Strangpreßprofilabschnitt 37 an der Rückfläche 34 des Strangpreßprofilabschnitts 36 mittig, bezogen auf dessen Länge, befestigt, wobei die Schulterfläche 48 an der Unterseite 35 anliegt.

In der Kammer 46 ist eine Wickelwelle 52 drehbar gelagert, an der mit einer Kante das Sicherheitsnetz 14 befestigt ist. Die Wickelwelle 52 ist, ebenso wie die Wickelwelle 44, mit Hilfe eines jeweils zugeordneten und nicht dargestellten Federmotors in Aufwickelrichtung des Sicherheitsnetzes 15 vorgespannt, so daß die Wickelwelle 52 bestrebt ist, das Sicherheitsnetz 15 aufzuwickeln und in das Gehäuse 13 hineinzuziehen.

Das Sicherheitsnetz 15 führt, ausgehend von der Wickelwelle 52, durch den zwischen den beiden Wänden 51 und 49 gebildeten Spalt nach außen.

In dem Abschnitt 39 des Strangpreßprofils 36, an dem der Abschnitt 37 im wesentlichen flächig anliegend befestigt ist, ist eine Nut 54 eingeformt, deren Schlitz 55 neben den Endkappen 45 die Verankerungsöffnung 33 bildet. Eine Wand der Nut 54 ist der den Boden bildende Abschnitt 41, während die andere Wand eine in die Kammer 43 vorspringende Wand 56 ist. Die Wand 56 verläuft, wie Fig. 6 erkennen läßt, unterhalb der Wickelwelle 44 bzw. des darauf gebildeten Wickels des Abdeckrollos 14.

Im Bereich der Nut 54 ist der Bodenabschnitt 41 unter Ausbildung einer Rastnut 57 profiliert, so daß eine Rastschulter 58 entsteht, die schräg nach unten gerichtet ist. Die Rastschulter 58 ist Teil einer nach unten weisenden Rastrippe 59.

Wegen der verhältnismäßig geringen Wandstärke führt die Rastnut 57 dazu, daß eine nach innen vorstehende Rippe entsteht, deren Scheitel 61 auf derselben Höhe liegt wie eine Anlagefläche 62, die sich im Inneren der Nut 54 bei deren dem Schlitz 55 gegenüberliegenden Ende befindet.

Der Rand 46 der Endkappen 45 ist im Bereich der Rückfläche 34 in Richtung auf den Strangpreßprofilabschnitt 37, der das Gehäuse für das Sicherheitsnetz 15 darstellt, verlängert, wodurch eine zu der Rückfläche 34 parallel verlaufende Wand 63 entsteht, die parallel und im Abstand zu der Rückfläche 34 verläuft. In diesem Spalt zwischen der Wand 63 und der Rückfläche 34 ist ein Betätigungsorgan 64 vertikal verschieblich geführt, das mittels einer Druckfeder 65, die sich an einem Arm 66 der Wand 63 abstützt, nach unten zu federnd vorgespannt ist.

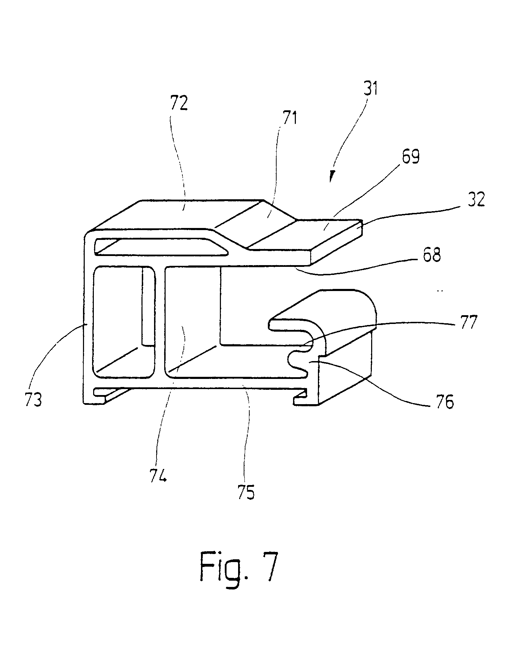

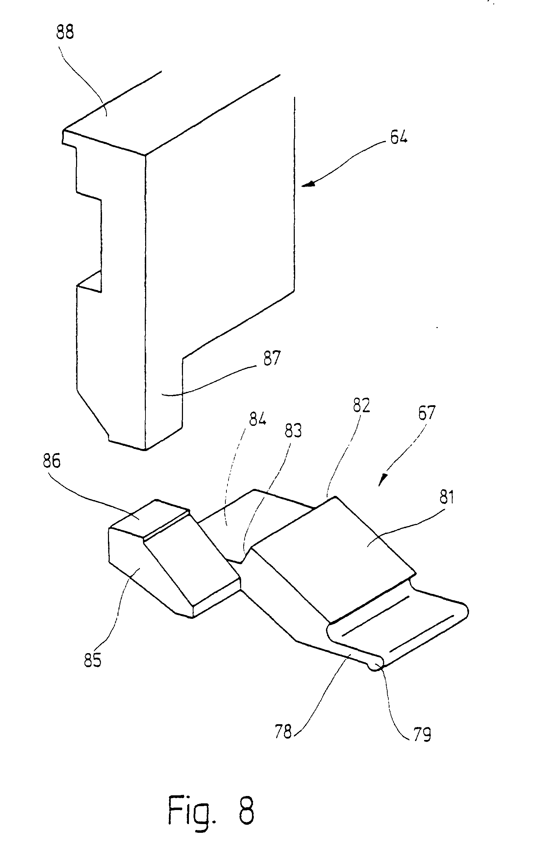

Der Aufbau der Verankerungszapfen 31 und mit ihnen zusammenwirkender Verriegelungsglieder 67 ist nachstehend anhand der Fig. 7 und 8 erläutert. Der Verankerungszapfen 31 ist, wie Fig. 7 erkennen läßt, ein Abschnitt ebenfalls eines Strangpreßprofils aus Aluminium, das, im Querschnitt gesehen, etwa U-förmig ist. Der Verriegelungszapfen 31 wird von einer planen Unterseite 68 und einer ebenfalls geraden Oberseite 69 begrenzt, die, ausgehend von dem freien Ende 32 des Verankerungszapfens 31, über eine Schrägfläche 71 in eine weitere zu der Unterseite 68 parallele Fläche 72 übergeht.

Zwei voneinander beabstandete und zueinander parallele Stege 73 und 74 verbinden den Verankerungszapfen mit einer unteren Befestigungs- und Halteplatte 75, die an ihrem vorderen freien Ende ein nach oben aufragendes Lagerteil 76 einstückig trägt. In diesem Lagerteil 76 ist eine zu dem Steg 74 hin offene, etwa dreiviertelkreisförmige zylindrische Nut 77 enthalten, die als Schwenklager für das Verriegelungsglied 67 dient.

Mit Hilfe der Befestigungsplatte 75 ist der Verankerungszapfen 31 in der Karosserie, beispielsweise auf einer in Fig. 6 gezeigten Konsole 78 befestigt.

Das Verriegelungsglied 67 ist ein Kunststofformteil mit in der Draufsicht etwa rechteckiger Gestalt. Es besteht aus einer Scharnierlasche 78, die an ihrem freien Ende einen zylindrischen Wulst 79 trägt. Der Wulst 79 ist so gestaltet, daß er in der Nut 77 drehbar ist und nur mittels einer axialen Bewegung in seiner Längsrichtung in die Nut 77 einführbar ist.

An dem von dem Wulst 79 abliegenden Ende geht die Scharnierlasche 78 in einen schräg nach oben aufragenden quaderförmigen Block 81 über, der eine Rastnase 82 mit einer sich daran anschließenden Rastfläche 83 bildet. Eine als planparallele Platte ausgebildete Verlängerung 84, die etwa parallel zu der Scharnierlasche 78 verläuft, schließt sich am unteren Ende der Rastfläche 83 an. Die Breite der Scharnierlasche 78, des quaderförmigen Blocks 81 und der Verlängerung 84, jeweils gemessen in der gleichen Richtung, entspricht etwa der Breite des Verankerungszapfens 31, gemessen in Richtung parallel zu der Längserstreckung der Nut 77.

An die dem Betrachter zugewandte Seitenfläche der Verlängerung 84 ist ein Klotz 85 angeformt, dessen Oberseite eine Betätigungsfläche 86 bildet. Mit dieser Betätigungsfläche 86 wirkt ein Fortsatz 87 zusammen, der ein nach unten ragender einstückiger Bestandteil des Betätigungsorgans 64 ist. Das Betätigungsorgan 64 ragt mit einer mit der Hand zu bedienenden Betätigungsfläche 87 nach oben über das Gehäuse 13 über.

Im montierten Zustand ist der in die Aufnahmetasche 25 ragende Teil des Verankerungszapfens 31 mit einer Kunststoffverkleidung 89 versehen, die in das zwischen den Verankerungszapfen 31 und der Befestigungsplatte 75 gebildete Maul hineinragt und die untere Bodenfläche 27 der Aufnahmetasche 25 sowie deren rückseitige Wand 26 bildet.

Die Handhabung der insoweit beschriebenen Abdeckeinrichtung 12 ist wie folgt:

Im eingesetzten Zustand liegt das Gehäuse 13 in den Aufnahmetaschen 25, wobei die dort vorkragenden Verankerungszapfen 31 durch die Verankerungsöffnungen 33 in die Nut 54 hineinragen. Die Kontur des mit der Verkleidung 89 versehenen Verankerungszapfens 31 ist an die Kontur der Wand 56 der Nut 54 angepaßt, während die plane Unterseite mit dem Wandabschnitt 62 und der Nase 61 in Berührung steht. Der Verankerungszapfen 31 hat in der Nut 54 nur ein sehr geringes Höhenspiel.

In Breitenrichtung gesehen reicht der Verankerungszapfen 31 von dem becherförmigen Rand 46 der betreffenden Endkappe 45 bis fast zu dem Betätigungsfortsatz 87 des Betätigungsorgans 64. Das seitliche Spiel des Verankerungszapfens 31 zwischen den genannten Bauteilen ist gerade so groß, daß Karosserietoleranzen noch ausgeglichen werden. In dieser Montage- bzw. Funktionsstellung fluchtet der Betätigungsfortsatz 87 mit der ihm gegenüberliegenden Betätigungsfläche 86.

Das Verriegelungsglied 67, das in der Nut 77 schwenkbar gelagert ist, greift mit seiner Rastnase 82 in die Rastnut 57 von unten her ein, wobei die Rastfläche 83 gegen die Rastfläche 58 des Gehäuses 13 anliegt. In dieser Stellung wird das Verriegelungsglied 67 durch eine Schraubenfeder 91 gehalten, die von der Unterseite her gegen die Verlängerung 84 wirkt, und die Kraft dieser Druckfeder 91 ist größer als die Kraft de Feder 65, damit die Verriegelungsstellung zwischen den beiden Rastflächen 58 und 83 nicht von der Feder 65 gelöst werden kann, die bestrebt ist, das Betätigungsorgan 64 nach unten zu drücken.

Der Benutzer kann bei in das Fahrzeug eingesetztem Gehäuse 13 beliebig das Abdeckrollo 14 oder das Sicherheitsnetz 15 aus dem Gehäuse 13 herausziehen und an den entsprechend vorgesehenen Karosseriestellen verankern. Falls bei einem Auffahrunfall in dem Laderaum befindliche Teile gegen das aufgespannte Sicherheitsnetz 15 geschleudert werden, werden die dabei auftretenden Kräfte einerseits durch die Aufhängung der Halteglieder 22 in den Aufnahmetaschen 24 aufgenommen und andererseits über die Wickelwelle 52 in den Gehäuseabschnitt 37 und von dort zu dem Gehäuseabschnitt 36 übertragen, der formschlüssig mit Hilfe der Nut 54 auf den Verankerungszapfen 31 gehalten ist. Die Verankerungszapfen 31 sind in der Lage, verhältnismäßig große, quer zu ihrer Längserstreckung, also nach oben gerichtete Kräfte aufzunehmen, ohne daß die Gefahr besteht, daß die Verbindung zwischen den Verankerungszapfen 31 und dem Gehäuse 13 verlorengeht.

Zur Entnahme der Abdeckeinrichtung 12 werden zunächst das Abdeckrollo 14 und das Sicherheitsnetz 15 aus ihren karosserieseitigen Verankerungen gelöst, damit sie sich auf die zugehörige Wickelwelle 44 bzw. 52 aufwickeln können. Sodann werden von Hand an beiden stirnseitigen Enden des Gehäuses 13 die nach oben über das Gehäuse 13 vorstehenden Betätigungsorgane 64 niedergedrückt, was dazu führt, daß die Verriegelungsglieder 67 gegen die Wirkung der Feder 91 nach unten schwenken, um die Rastnase 82 aus der Rastnut 57 herauszubringen. Sodann kann das Gehäuse 13 mit dem darin aufgewickelten Abdeckrollo und dem Sicherheitsnetz 15 nach hinten aus dem Heckbereich 1 entnommen werden, um den vollen Laderaum zur Verfügung zu haben.

Das Einsetzen der Abdeckeinrichtung 12 geschieht sinngemäß in umgekehrter Richtung, wobei eine an dem Fortsatz 87 vorhandene Schrägfläche 90 dafür sorgt, daß das Betätigungsorgan 64 beim Aufgleiten auf die Betätigungsfläche 86 gegen die Wirkung der Feder 65 nach oben angehoben wird.

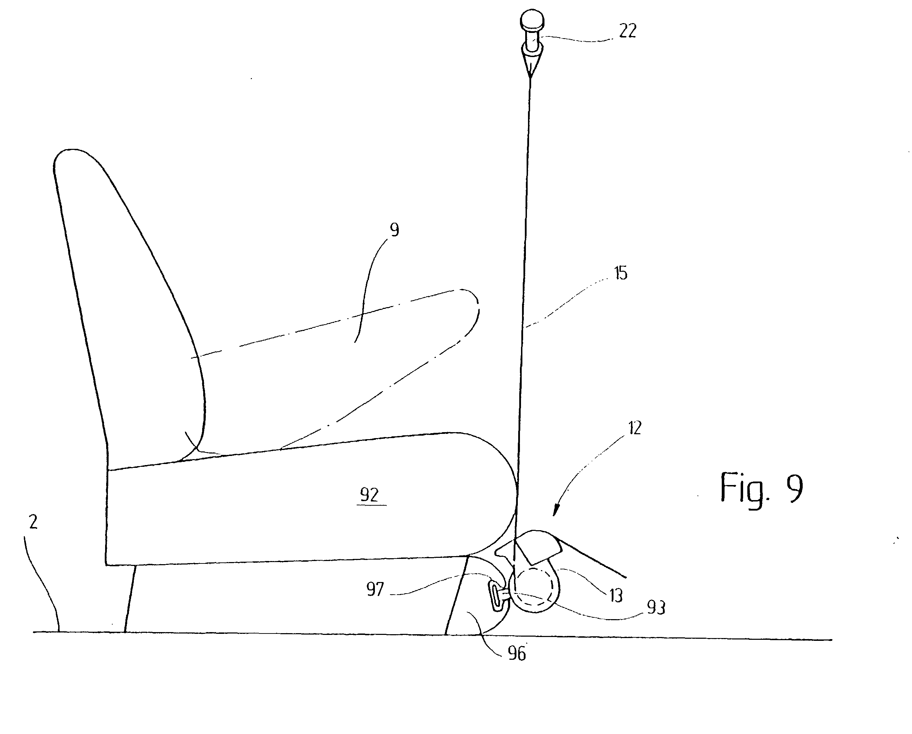

In Fig. 9 ist eine Weiterbildung der Abdeckeinrichtung 12 schematisch veranschaulicht, deren Sicherheitsnetz 15 auch dann verwendet werden kann, wenn die Rücksitzlehne 9 nach vorne auf ihren zugehörigen Rücksitz 92 umgeklappt ist. Zu diesem Zweck sind an dem Gehäuseabschnitt 37 zwei oder mehr pilzförmige Verankerungsglieder 93 vorgesehen, die einen im wesentlichen zylindrischen Schaft 94 sowie einen an dem Schaft sitzenden scheibenförmigen Kopf 95 tragen. Mit dem Schaft 94 sind die Verankerungsglieder 93, wie in Fig. 4 gezeigt, angebracht.

Unterhalb des Rücksitzes 92 ist im Fußraum eine durch die hinteren Türen zugängliche Schiene 96 mit einer T-förmigen Nut 97 angebracht. Der Querschnitt der T-förmigen Nut 97 ist an das seitliche Profil der pilzförmigen Verankerungsglieder 93 angepaßt. Wenn der gesamte Laderaum benötigt wird, wird das aus den Aufnahmetaschen 25 entnommene Gehäuse 13 durch die geöffnete hintere Tür in den Fußraum eingeschoben, wobei die pilzförmigen Verankerungsglieder 93 in die T-Nut 95 eingefädelt werden und formschlüssig das Gehäuse 13 mit der Schiene 94 verbinden. Das Gehäuse 13 liegt jetzt wiederum quer zur Fahrzeuglängsachse, jedoch im Fußraum, und das ausgezogene Sicherheitsnetz 15 kann wiederum in bekannter Weise unter dem Dachhimmel befestigt werden.

Eine Abdeckeinrichtung weist ein in einem Fahrzeug zu befestigendes Gehäuse auf, in dem sich zwei Wickelwellen befinden. Mit der einen Wickelwelle ist ein Abdeckrollo verbunden, während auf der anderen Wickelwelle ein Sicherheitsnetz aufwickelbar ist. Das Gehäuse ist im Bedarfsfalle aus dem Fahrzeug zu entnehmen, wobei die Verankerung für das Gehäuse so gestaltet ist, daß sie in der Lage ist, jene Kräfte aufzunehmen, die auftreten, wenn bei einem Frontalaufprall lose Teile aus dem Laderaum des Kraftfahrzeugs gegen das aufgespannte Sicherheitsnetz geschleudert werden.

## Patentansprüche

1. Abdeckeinrichtung (**12**), um zumindest einen Teil eines Laderaums eines Kombi-Personenkraftfahrzeugs von dessen Fahrgastraum abzutrennen,
mit einem länglichen aus dem Laderaum zu entnehmenden starren Gehäuse (**13**), das wenigstens einen im wesentlichen über dessen Länge durchgehenden Schlitz (**42**) und eine längliche Kammer **(43, 46)** aufweist, zu der der Schlitz (**42**) eine Zugriffsöffnung bildet,
mit wenigstens einer in der Kammer **(43, 46)** drehbar gelagerten Wickelwelle **(44, 52**),
mit einer an der wenigstens einen Wickelwelle (**44, 52**) befestigten flexiblen Bahn (**14, 15**), die durch den wenigstens einen Schlitz (**42**) aus dem Gehäuse (**13**) ausziehbar ist,
mit zumindest neben jedem der Enden des Gehäuses (**13**) angeordneten Verankerungsöffnungen (**33**),
mit zumindest zwei Verankerungsgliedern (**31**), von denen jedes einen auskragenden Arm aufweist, der dazu vorgesehen ist, bei in den Laderaum eingesetzter Abdeckeinrichtung (**12**) in die jeweils zugehörige Verankerungsöffnung **(33)** einzudringen **dadurch gekennzeichnet, daß** sich dieser auskragende Arm im wesentlichen parallel zu der Fahrtrichtung erstreckt, wobei das freie Ende in Richtung auf das Vorder - oder das Hinterende des Fahrzeugs weist.

2. Abdeckeinrichtung nach Anspruch 1, **dadurch gekennzeichnet, dass** die Verankerungsöffnungen (**33**) in dem Gehäuse (**13**) vorgesehen und die Verankerungsglieder (**31**), die entgegen der Fahrtrichtung auskragen, starr an der Karosserie des Kombi-Personenkraftfahrzeugs angebracht sind.

3. Abdeckeinrichtung nach Anspruch 1, **dadurch gekennzeichnet, dass** die Verankerungsöffnung (**33**), in Längsrichtung des Gehäuses (**13**) gemessen, eine größere Breite aufweist als das jeweilige Verankerungsglied (**31**), gemessen in derselben Richtung.

4. Abdeckeinrichtung nach Anspruch 1, **dadurch gekennzeichnet, dass** die beiden Verankerungsöffnungen (**33**) von einem über die Länge des Gehäuses durchgehenden Schlitz (**55**) gebildet sind.

5. Abdeckeinrichtung nach Anspruch 4, **dadurch gekennzeichnet, dass** der Schlitz (**55**) der Schlitz einer in dem Gehäuse (**13**) enthaltenen Nut (**54**) ist.

6. Abdeckeinrichtung nach Anspruch 5, **dadurch gekennzeichnet, dass** die Weite der Nut **(54),** gemessen in Höhenrichtung, im Wesentlichen an die Dicke des Verankerungsglieds (**31**) angepasst ist.

7. Abdeckeinrichtung nach Anspruch 5, **dadurch gekennzeichnet, dass** das Gehäuse (**13**) einen Abschnitt (**36**) eines Strangpressprofils aufweist, in den die Nut (**54**) eingeformt ist und das den Schlitz (**42**) für die wenigstens eine Bahn (**14, 15**) enthält sowie die Kammer (**43**) in Umfangsrichtung der Wickelwelle (**44**) begrenzt, und dass die Enden des Abschnitts (**36**) des Strangpressprofils mit Endkappen (**45**) versehen sind.

8. Abdeckeinrichtung nach Anspruch 1, **dadurch gekennzeichnet, dass** sich der Arm des Verankerungsglieds **(31)** zumindest etwa horizontal erstreckt.

9. Abdeckeinrichtung nach Anspruch 1, **dadurch gekennzeichnet, dass** der Arm des Verankerungsglieds (**31**) an seiner Oberseite (**69, 71, 72**) und an seiner Unterseite (68) von im Wesentlichen geraden Flächen begrenzt ist, deren Erzeugende parallel zu der Längsrichtung des Gehäuses (13) liegt.

10. Abdeckeinrichtung nach Anspruch 1, **dadurch gekennzeichnet, dass** beweglich gelagerte Verriegelungsglieder **(67)** vorgesehen sind, die in Richtung auf eine Verriegelungsstellung mittels Federeinrichtungen (**91**) elastisch vorgespannt sind und dazu dienen, das Gehäuse **(13)** gegen ein Herunterziehen von den Verankerungsgliedern **(31)** zu sichern.

11. Abdeckeinrichtung nach Anspruch 10, **dadurch gekennzeichnet, dass** das Verriegelungsglied **(67)** an der Karosserie schwenkbar gelagert ist.

12. Abdeckeinrichtung nach Anspruch 10, **dadurch gekennzeichnet, dass** das Verriegelungsglied (**67**) unterhalb des zugehörigen Verankerungsglieds (**31**) angeordnet ist und dass an dem Gehäuse **(13)** unterhalb der Verankerungsöffnung (**33**) eine mit dem Verriegelungsglied (**31**) zusammenwirkende Rastrippe (**59**) vorgesehen ist.

13. Abdeckeinrichtung nach Anspruch 12, **dadurch gekennzeichnet, dass** sich die Rastrippe **(59)** im Wesentlichen über die gesamte Länge des Gehäuses **(13)** erstreckt.

14. Abdeckeinrichtung nach den Ansprüchen 7 und 12, **dadurch gekennzeichnet, dass** die Rippe (**59**) an dem Abschnitt (**36**) des Strangpressprofils angeformt ist.

15. Abdeckeinrichtung nach Anspruch 10, **dadurch gekennzeichnet, dass** mit dem Verankerungsglied **(31)** Lagermittel **(77)** für das betreffende Verriegelungsglied **(67)** verbunden sind.

16. Abdeckeinrichtung nach Anspruch 15, **dadurch gekennzeichnet, dass** das Verankerungsglied (**31**) und die Lagermittel (**77**) miteinander einstückig sind.

17. Abdeckeinrichtung nach Anspruch 15, **dadurch gekennzeichnet, dass** das Verankerungsglied **(31)** und die Lagermittel (**77**) von einem Abschnitt eines Strangpressprofils gebildet sind.

18. Abdeckeinrichtung nach Anspruch 15, **dadurch gekennzeichnet, dass** die Lagermittel (**77**) einen unterhalb des Verankerungsglieds (**31**) angeordneten und zu diesem parallel verlaufenden Lagerarm (**75**) aufweisen, der an seinem freien Ende eine Lagernut (**77**) mit zylindrischem Querschnitt aufweist, in der das Verriegelungsglied (**67**) mit einem zu der Lagernut (**77**) komplementären Wulst (**79**) schwenkbar gelagert ist.

19. Abdeckeinrichtung nach Anspruch 10, **dadurch gekennzeichnet, dass** das Verriegelungsglied (**67**) eine Rastnase (**82**) trägt, die sich im Abstand zu seiner Lagerstelle (**79**) befindet.

20. Abdeckeinrichtung nach Anspruch 10, **dadurch gekennzeichnet, dass** das Verriegelungsglied (**67**) mit einer Betätigungsfläche (**86**) versehen ist, die mit einem Betätigungsorgan (**64**) zusammenwirkt, um die Eingriffstellung zwischen der Rastnase (**82**) und der Rastrippe (**59**) zu lösen.

21. Abdeckeinrichtung nach Anspruch 10, **dadurch gekennzeichnet, dass** die Betätigungsfläche (**86**) seitlich neben dem Verankerungsglied (**31**) vorsteht.

22. Abdeckeinrichtung nach Anspruch 20, **dadurch gekennzeichnet, dass** das Betätigungsorgan (**64**) in dem Gehäuse (**13**) gelagert ist.

23. Abdeckeinrichtung nach Anspruch 20, **dadurch gekennzeichnet, dass** das Betätigungsorgan (**64**) ein Schieber ist.

24. Abdeckeinrichtung nach Anspruch 20, **dadurch gekennzeichnet, dass** das Betätigungsorgan (**64**) außerhalb und neben der Verankerungsöffnung **(33)** verläuft.

25. Abdeckeinrichtung nach Anspruch 1, **dadurch gekennzeichnet, dass** das Gehäuse (**13**) eine zweite Kammer **(43, 46)** mit einem eigenen Schlitz als Zugangsöffnung aufweist und dass in der zweiten Kammer **(43, 46)** eine zweite Wickelwelle **(44, 52)** drehbar gelagert ist.

26. Abdeckeinrichtung nach Anspruch 25, **dadurch gekennzeichnet, dass** die zweite Kammer **(43, 46)** von einem eigenen Abschnitt **(36, 37)** eines Strangpressprofils gebildet ist und dass die beiden jeweils Kammern **(43, 46**) bildenden Abschnitte **(36, 37)** von Strangpressprofilen unlösbar miteinander verbunden sind.

27. Abdeckeinrichtung nach Anspruch 1, **dadurch gekennzeichnet, dass** die wenigstens eine Bahn ein Abdeckrollo **(14)** ist.

28. Abdeckeinrichtung nach Anspruch 1, **dadurch gekennzeichnet, dass** die wenigstens eine Bahn **(15)** ein Sicherheitsnetz ist.

29. Abdeckeinrichtung nach Anspruch 1, **dadurch gekennzeichnet, dass** in dem Gehäuse (**13**) wenigstens eine Antriebseinrichtung vorgesehen ist, durch die die damit gekuppelte Wickelwelle **(44, 52)** im Sinne des Einfahrens der flexiblen Bahn **(14, 15)** in Umdrehungen zu versetzen ist.

30. Abdeckeinrichtung nach Anspruch 1, **dadurch gekennzeichnet, dass** sich die Verankerungsglieder (**31**) in der Nähe der oberen Kante einer aufgestellten Rücksitzlehne (**9**) des Kombi-Personenkraftfahrzeugs befinden.

31. Abdeckeinrichtung nach Anspruch 1, **dadurch gekennzeichnet, dass** ein zweiter Satz von Verankerungsgliedern (**93**) und zugehörigen Verankerungsöffnungen (**97**) vorgesehen ist, wobei der zweite Satz derart gestaltet ist, dass die Abdeckeinrichtung (**12**) in einem Fußraum des Kombi-Personenkraftfahrzeugs zu verankern ist.

32. Abdeckeinrichtung nach Anspruch 31, **dadurch gekennzeichnet, dass** die Verankerungsglieder (**93**) des zweiten Satzes pilzartige Gestalt haben.

33. Abdeckeinrichtung nach Anspruch 31, **dadurch gekennzeichnet, dass** die Verankerungsöffnungen des zweiten Satzes zumindest einends offene Nuten (**97**) sind, die in ihrer Gestalt an die pilzartigen Verankerungsglieder **(93)** angepasst sind.

## Claims

1. A cover device (12) for separating at least part of a luggage compartment of an estate car from the passenger compartment, comprising
- an elongate rigid casing (13) removable from the luggage compartment and formed with at least one continuous slot (42) substantially along its length and comprising an elongate chamber (43, 46) to which the slot (42) provides an access opening,
- at least one winding shaft (44, 52) mounted for rotation in the chamber (43, 46),
- a flexible web (14, 15) fastened to the at least one winding shaft (44, 52) and adapted to be pulled out of the casing (13) through the at least one slot (42),
- anchoring openings (33) disposed at least near one end of the casing (13), and
- at least two anchoring elements (31), each having a projecting arm for pressing the cover device (12) into the associated anchoring opening (33) after it has been inserted into the luggage compartment, **characterised in that** the projecting arm extends substantially parallel to the direction of travel and the free end points towards the front or the rear end of the vehicle.

2. A cover device according to claim 1, **characterised in that** the anchoring openings (33) are provided in the casing (13) and the anchoring elements (31), which project opposite to the direction of travel, are rigidly mounted on the body of the estate car.

3. A cover device according to claim 1, **characterised in that** the anchoring opening (33), measured in the longitudinal direction of the casing (13), has a greater width than the respective anchoring element (31), measured in the same direction.

4. A cover device according to claim 1, **characterised in that** the two anchoring openings (33) are formed by a continuous slot (55) along the length of the casing.

5. A cover device according to claim 4, **characterised in that** the slot (55) is the slot of a groove (54) contained in the casing (13).

6. A cover device according to claim 5, **characterised in that** the width of the slot (54) measured in the vertical direction is substantially adapted to the thickness of the anchoring member (31).

7. A device according to claim 5, **characterised in that** the casing (13) comprises a portion (36) of an extruded profile in which the groove (54) is formed and contains the slot (42) for the at least one web (14, 15) and bounds the chamber (43) in the peripheral direction of the winding shaft (44) and the ends of the portion (36) of the extruded profile have end caps (45).

8. A cover device according to claim 1, **characterised in that** the arm of the anchoring member (31) extends approximately horizontally.

9. A cover device according to claim 1, **characterised in that** the arm of the anchoring member (31) is bounded above (69, 71, 72) and below (68) by substantially flat surfaces, the generatrix whereof lies parallel to the longitudinal direction of the casing (13).

10. A cover device according to claim 1, **characterised in that** movably mounted locking members (67) are provided and are elastically tensioned by spring devices (91) towards a locked position and are used to prevent the casing (13) by being pulled down by the anchoring members (31).

11. A cover device according to claim 10, **characterised in that** the locking member (67) is pivotably mounted on the body.

12. A cover device according to claim 10, **characterised in that** the locking member (67) is disposed underneath the associated anchoring member (31) and a catch rib (59) co-operating with the locking member (31) is provided on the casing (13) under the anchoring opening (33).

13. A cover device according to claim 12, **characterised in that** the catch rib (59) extends substantially over the entire length of the casing (13).

14. A cover device according to claims 7 and 12, **characterised in that** the rib (59) is integrally formed in the portion (36) of the extruded profile.

15. A cover device according to claim 10, **characterised in that** bearing means (77) for the respective locking member (67) are connected to the anchoring member (31).

16. A cover device according to claim 15, **characterised in that** the anchoring member (31) is integral with the locking means (77).

17. A cover device according to claim 15, **characterised in that** the anchoring member (31) and the bearing means (77) are formed by a portion of an extruded profile.

18. A cover device according to claim 15, **characterised in that** the bearing means (77) comprise a bearing arm (75) disposed underneath the anchoring member (31) and parallel thereto and at its free end has a groove (77) with a cylindrical cross-section in which a bead (79) on the locking member (67) complementary with the groove (77) is pivotably mounted.

19. A cover device according to claim 10, **characterised in that** the locking member (67) has a catch (82) at a distance from its bearing (79).

20. A cover device according to claim 10, **characterised in that** the locking member (67) has an actuating surface (86) which co-operates with an actuating means (64) for releasing the engagement between the catch (82) and the rib (59).

21. A cover device according to claim 10, **characterised in that** the actuating surface (86) projects laterally alongside the anchoring member (31).

22. A cover device according to claim 20, **characterised in that** the actuating means (64) is mounted in the casing (13).

23. A cover device according to claim 20, **characterised in that** the actuating means (64) is a slide.

24. A cover device according to claim 20, **characterised in that** the actuating means (64) extends outside and near the anchoring opening (33).

25. A cover device according to claim 1, **characterised in that** the casing (13) has a second chamber (43, 46) with an individual slot constituting an access opening, and a second winding shaft (44, 52) is mounted for rotation in the second chamber (43, 46).

26. A cover device according to claim 25, **characterised in that** the second chamber (43, 46) is formed by a separate portion (33, 37) of an extruded profile and the two extruded-profile portions (36, 37) forming the two respective chambers (43, 46) are non-releasably connected to one another.

27. A cover device according to claim 1, **characterised in** the at least one web is a blind (14).

28. A cover device according to claim 1, **characterised in** the at least one web (15) is a safety net.

29. A cover device according to claim 1, **characterised in that** at least one drive device is provided in the casing (13) and rotates the winding shaft (44, 52) coupled thereto in the direction for inserting the flexible web (14, 15).

30. A cover device according to claim 1, **characterised in that** the anchoring members (31) are near the upper edge of a put-up back rest (9) in the estate car.

31. A cover device according to claim 1, **characterised in that** a second set of anchoring members (93) and associated anchoring openings (97) are provided, the second set being designed so that the cover device (12) can be anchored in a foot space in the estate car.

32. A cover device according to claim 31, **characterised in that** the second set of anchoring members (93) are mushroom-shaped.

33. A cover device according to claim 31, **characterised in that** the second set of anchoring openings are grooves (97) open at at least one end and adapted in shape to the mushroom-like anchoring members (93).

## Revendications

1. Installation de recouvrement (12) pour séparer au moins une partie de l'espace de chargement d'un véhicule de type break par rapport à l'espace des passagers, comprenant :
- un boîtier rigide, allongé (13), qui s'extrait de l'espace de chargement, ce boîtier ayant au moins une fente continue (42) s'étendant essentiellement sur sa longueur et une chambre allongée (43, 46) pour laquelle la fente (42) constitue une ouverture d'accès,
- au moins un arbre d'enroulement (44, 45) monté à rotation dans la chambre (43, 46),
- au moins une nappe souple (14, 15) fixée à l'arbre d'enroulement (44, 52) qui peut s'extraire du boîtier (13) au moins par la fente (42),
- au moins des orifices d'accrochage (33) au niveau de chaque extrémité du boîtier (13),
- au moins deux organes d'accrochage (31) dont chacun comporte un bras en saillie, prévu pour que lorsque l'installation de recouvrement (12) est placée dans l'espace de chargement, il pénètre dans l'orifice d'accrochage correspondant (33),
**caractérisée en ce que**
le bras s'étend en saillie essentiellement parallèlement à la direction de roulement et l'extrémité libre est dirigée vers le côté avant ou le côté arrière du véhicule.

2. Installation de recouvrement selon la revendication 1,
**caractérisé en ce que**
les orifices d'accrochage (33) sont prévus dans le boîtier (13) et les organes d'accrochage (31) qui viennent en saillie dans la direction opposée à la direction de déplacement, sont montés de manière rigide à la carrosserie du véhicule.

3. Installation de recouvrement selon la revendication 1,
**caractérisée en ce que**
l'orifice d'accrochage (33) présente une largeur plus grande dans la direction longitudinale du boîtier (13) que celle de l'organe d'accrochage (31) mesurée dans la même direction.

4. Installation de recouvrement selon la revendication 1,
**caractérisée en ce que**
les deux orifices d'accrochage (33) sont formés par une fente (55) s'étendant sur la longueur du boîtier.

5. Installation de recouvrement selon la revendication 4,
**caractérisée en ce que**
la fente (55) est la fente d'uns rainure (54) du boîtier (13).

6. Installation de recouvrement selon la revendication 5,
**caractérisée en ce que**
la largeur de la rainure (54) mesurée dans la direction verticale est essentiellement adaptée à l'épaisseur de l'organe d'accrochage (31).

7. Installation de recouvrement selon la revendication 5,
**caractérisée en ce que**
le boîtier (13) comporte un segment (36) d'un profil extrudé dans lequel est formée une rainure (54) et qui comporte la fente (42) pour au moins une nappe (14, 15) et délimite la chambre (43) dans la direction périphérique de l'arbre d'enroulement (44), et les extrémités du segment (36) du profilé extrudé sont munies de capuchons d'extrémité (45).

8. Installation de recouvrement selon la revendication 1,
**caractérisée en ce que**
le bras de l'organe d'accrochage (31) s'étend au moins sensiblement horizontalement.

9. Installation de recouvrement selon la revendication 1,
**caractérisée en ce que**
le bras de l'organe d'accrochage (31) est délimité au niveau de son côté supérieur (69, 71, 72) et au niveau de son côté inférieur (68) par des surfaces essentiellement droites dont les génératrices sont parallèles à la direction longitudinale du boîtier (13).

10. Installation de recouvrement selon la revendication 1,
**caractérisée en ce qu'**
elle comporte des organes de verrouillage (67) montés mobiles qui sont précontraints élastiquement dans la direction d'une position de verrouillage par des installations à ressort (91) et servent à bloquer le boîtier (13) pour éviter de tirer vers le bas les organes d'accrochage (31).

11. Installation de recouvrement selon la revendication 10,
**caractérisée en ce que**
l'organe de verrouillage (67) est monté pivotant sur la carrosserie.

12. Installation de recouvrement selon la revendication 10,
**caractérisée en ce que**
l'organe de verrouillage (67) est installé en dessous de l'organe d'accrochage correspondant (31) et sous l'orifice d'accrochage (33), le boîtier (13) comporte une nervure d'accrochage (59) coopérant avec l'organe de verrouillage (31).

13. Installation de recouvrement selon la revendication 12,
**caractérisée en ce que**
la nervure d'accrochage (59) s'étend essentiellement sur toute la longueur du boîtier (13).

14. Installation de recouvrement selon les revendications 7 et 12,
**caractérisée en ce que**
la nervure (59) est formée sur le segment (36) du profilé extrudé.

15. Installation de recouvrement selon la revendication 10,
**caractérisée en ce que**
des moyens formant paliers (77) pour l'organe de verrouillage (67) correspondant sont reliés à l'organe de verrouillage (31).

16. Installation de recouvrement selon la revendication 15,
**caractérisée en ce que**
l'organe de verrouillage (31) et les moyens formant paliers (77) constituent une seule pièce.

17. Installation de recouvrement selon la revendication 15,
**caractérisée en ce que**
l'organe d'accrochage (31) et les moyens formant paliers (77) sont formés par un segment d'un profilé extrudé.

18. Installation de recouvrement selon la revendication 15,
**caractérisée en ce que**
les moyens formant paliers (77) ont un bras de palier (75) prévu sous l'organe d'accrochage (31) et parallèle à celui-ci, ce bras ayant à son extrémité libre une rainure formant palier (77) à section cylindrique dans laquelle pénètre en pivotement, l'organe de verrouillage (67) avec son bourrelet (79) complémentaire à la rainure de palier (77).

19. Installation de recouvrement selon la revendication 10,
**caractérisée en ce que**
l'organe de verrouillage (67) porte un bec d'accrochage (82) qui se trouve à une certaine distance de son point de palier (79).

20. Installation de recouvrement selon la revendication 10,
**caractérisée en ce que**
l'organe de verrouillage (67) est muni d'une surface d'actionnement (86) coopérant avec un organe d'actionnement (64) pour libérer la prise entre le bec d'accrochage (82) et la nervure d'accrochage (59).

21. Installation de recouvrement selon la revendication 10,
**caractérisée en ce que**
la surface d'actionnement (86) est en saillie latéralement à côté de l'organe d'accrochage (31).

22. Installation de recouvrement selon la revendication 20,
**caractérisée en ce que**
l'organe d'actionnement (64) est monté dans le boîtier (13).

23. Installation de recouvrement selon la revendication 20,
**caractérisée en ce que**
l'organe d'actionnement (64) est un coulisseau.

24. Installation de recouvrement selon la revendication 20,
**caractérisée en ce que**
l'organe d'actionnement (64) passe en dehors et à côté de l'orifice d'accrochage (33).

25. Installation de recouvrement selon la revendication 1,
**caractérisée en ce que**
le boîtier (13) comporte une seconde chambre (43, 46) avec sa propre fente comme orifice d'accès et la seconde chambre (43, 46) reçoit à rotation un second arbre d'enroulement (44, 52).

26. Installation de recouvrement selon la revendication 25,
**caractérisée en ce que**
la seconde chambre (43, 46) est formée par un segment (36, 37) d'un profilé extrudé et les deux segments (36, 37) formant chaque fois les chambres (43, 46) sont reliés solidairement par les profilés extrudés.

27. Installation de recouvrement selon la revendication 1,
**caractérisée en ce qu'**
au moins une nappe est un rideau enroulé (14).

28. Installation de recouvrement selon la revendication 1,
**caractérisée en ce qu'**
au moins une nappe (15) est un filet de sécurité.

29. Installation de recouvrement selon la revendication 1,
**caractérisée en ce que**
le boîtier (13) comporte au moins une installation d'entraînement qui met en rotation l'arbre d'enroulement (44, 52) couplé à cette installation, pour rentrer la nappe souple (14, 15).

30. Installation de recouvrement selon la revendication 1,
**caractérisée en ce que**
les organes d'accrochage (31) se trouvent à proximité du bord supérieur du dossier relevé (9) du siège arrière d'un véhicule de tourisme de type break.

31. Installation de recouvrement selon la revendication 1,
**caractérisée en ce qu'**
elle comporte un second jeu d'organes d'accrochage (93) et des organes d'accrochage (97) correspondants, le second jeu étant conçu de façon que l'installation de recouvrement (12) puisse être ancrée au niveau de l'espace des pieds dans le véhicule.

32. Installation de recouvrement selon la revendication 31,
**caractérisée en ce que**
les organes d'accrochage (93) du second jeu ont une forme de champignons.

33. Installation de recouvrement selon la revendication 31,
**caractérisée en ce que**
les orifices d'accrochage du second jeu sont des rainures (97) dont au moins une extrémité est ouverte et dont la forme est adaptée à celle des organes d'accrochage en forme de champignons (93).
